# EUROPÄISCHE PATENTSCHRIFT

(11) **EP 1 523 409 B1**
(45) Veröffentlichungstag und Bekanntmachung des Hinweises auf die Patenterteilung: **30.03.2011**
(21) Anmeldenummer: 03787653.9
(22) Anmeldetag: 12.07.2003
(51) Int. Cl.: B41F 13/08, F16F 15/10

(54) **VERFAHREN ZUR VERMINDERUNG VON SCHWINGUNGEN AN ROTIERENDEN BAUTEILEN SOWIE SCHWINGUNGSGEDÄMPFTES ROTIERENDES BAUTEIL**
METHOD FOR REDUCING VIBRATIONS ON ROTATING PARTS, AND VIBRATION-DAMPED ROTATING PART
PROCEDE POUR REDUIRE LES VIBRATIONS AU NIVEAUX D'ELEMENTS ROTATIFS ET ELEMENT ROTATIF CORRESPONDANT AMORTI EN VIBRATIONS

(30) Priorität: 19.07.2002 DE 10233086; 19.11.2002 DE 10253997
(43) Veröffentlichungstag der Anmeldung: 20.04.2005
(73) Patentinhaber: Koenig & Bauer Aktiengesellschaft, 97080 Würzburg (DE)
(72) Erfinder: FEHREN, Heinrich, 34127 Kassel (DE); GLÖCKNER, Erhard, Herbert, 97246 Eibelstadt (DE); GNAUERT, Uwe, 37083 Göttingen (DE); HANSELKA, Holger, 64297 Darmstadt (DE); KELLER, Bernd, Ulrich, Herbert, 97209 Veitshöchheim (DE); KOHLRAUTZ, Daniel, 37115 Duderstadt (DE); LINZ, Christof, 39108 Magdeburg (DE); SIEBALD, Hubertus, 37124 Rosdorf (DE); TRIEBEL, Grit, 39108 Magdeburg (DE); WALDSCHMIDT, Axel, 37130 Gleichen (DE)
(86) Internationale Anmeldenummer: PCT/DE2003/002348
(87) Internationale Veröffentlichungsnummer: WO 2004/016431

(56) Entgegenhaltungen:
- EP-A- 0 194 618
- WO-A-01/50035

## Beschreibung

Verfahren zur Verminderung von Schwingungen an rotierenden Bauteilen sowie schwingungsgedämpftes rotierendes Bauteil

Die Erfindung betrifft ein Verfahren zur Verminderung von Schwingungen an rotierenden Bauteilen sowie ein schwingungsgedämpftes rotierendes Bauteil gemäß dem Oberbegriff des Anspruchs 1 bzw. 8.

Die EP 01 94 618 B1 offenbart eine Vorrichtung zur Verminderung von Schwingungen, welche durch das Überrollen eines auf der Mantelfläche befindlichen Kanals verursacht wird. Hierbei ist im Ein- und/oder Auslaufbereich des Kanals eine Überhöhung der Kreiskontur zur Beeinflussung des Kraftwechselverhaltens angeordnet.

In der WO 01 50 035 A1 wird ein Verfahren zur Kompensation von Schwingungen rotierender Bauteile offenbart, wobei ein Aktuator im Bereich einer Mantelfläche des rotierenden Bauteils angeordnet ist, und bei einer Aktivierung in Abhängigkeit von der Drehwinkellage des rotierenden Bauteils der Schwingung mit eine Kraftkomponente in axialer Richtung entgegenwirkt.

Der Erfindung liegt die Aufgabe zugrunde, ein Verfahren zur Verminderung von Schwingungen an rotierenden Bauteilen sowie ein schwingungsgedämpftes rotierendes Bauteil zu schaffen.

Die Aufgabe wird erfindungsgemäß durch die Merkmale des Anspruchs 1 bzw. 8 gelöst.

Die mit der Erfindung erzielbaren Vorteile bestehen insbesondere darin, dass eine Möglichkeit geschaffen wurde, Schwingungen wirksam und variabel zu vermindern. Die Verminderung der Schwingung kann während der laufenden Produktion aktiv und ggf. adaptiv erfolgen und an Betriebsbedingungen angepasst werden.

Insbesondere von Vorteil ist das Verfahren an mindestens einem von zwei aufeinander abrollenden rotierenden Bauteilen, z. B. Zylindern oder Walzen, einsetzbar, wobei wenigstens eines der Bauteile in Umfangsrichtung gesehen auf seiner Mantelfläche zumindest eine Unterbrechung, z. B. einen Kanal, aufweist.

Durch die, insbesondere fernbetätigbare, Veränderbarkeit von Geometrie und/oder Lage und/oder Höhe der Überhöhung(en) auf der Mantelfläche ist zum einen über verschiedenste Betriebszustände wie z. B. Rotationsgeschwindigkeiten die Schwingung optimal verminderbar. Auf der anderen Seite ist die Geometrie und/oder Lage bzw. Höhe je Umdrehung bzw. eines Teils der Umdrehung veränder- bzw. modulierbar um beispielsweise bei Kontakt des Rotationskörpers mit mehreren Zylindern und/oder Walzen dem Überrollen der Unterbrechung an jeder der Nippstellen gerecht zu werden.

In einer vorteilhaften Ausführung ist ein fernbetätigbarer Aktuator als mit Druckmitteln beaufschlagbarer Aktuator, z. B. als hydraulische oder pneumatische Einheit, ausgeführt. In einer Variante ist er piezzoelektrisch ausgebildet.

Ausführungsbeispiele der Erfindung sind in den Zeichnungen dargestellt und werden im folgenden näher beschrieben.

Es zeigen:
- Fig. 1: eine Prinzipskizze zweier zusammen wirkender rotierender Bauteile;
- Fig. 2: eine vergrößerte Darstellung einer Nippstelle gemäß Fig. 1;
- Fig. 3: qualitative Verläufe einer Abhängigkeit einer Beschleunigung von der Zeit (A: Schwingung ohne Ausbildung der Überhöhung; B: mit Ausbildung einer Überhöhung);
- Fig. 4: ein ersten Ausführungsbeispiel für die Vorrichtung zur Verminderung von Schwingungen;
- Fig. 5: ein ersten Ausführungsbeispiel für die Integration einer Klemm- und/oder Spanneinrichtung;
- Fig. 6: ein zweites Ausführungsbeispiel für die Integration einer Klemm- und/oder Spanneinrichtung;
- Fig. 7: ein drittes Ausführungsbeispiel für die Integration einer Klemm- und/oder Spanneinrichtung;
- Fig. 8: eine schematische Darstellung für das Verfahren zur Steuerung der Vorrichtung;
- Fig. 9: eine qualitative Darstellung eines Zusammenhangs zwischen einer Abrollgeschwindigkeit und der Höhe der Überhöhung bzw. dem Druck;
- Fig. 10: eine schematische Darstellung für das Verfahren zur Regelung der Vorrichtung;
- Fig. 11: eine qualitative Darstellung eines Zusammenhangs zwischen einer relativen Amplitude und der Höhe der Überhöhung bzw. dem Druck;
- Fig. 12: eine schematische Darstellung für das Verfahren zur Regelung der Vorrichtung mit vier jeweils paarweise zusammen wirkenden rotierenden Bauteilen.

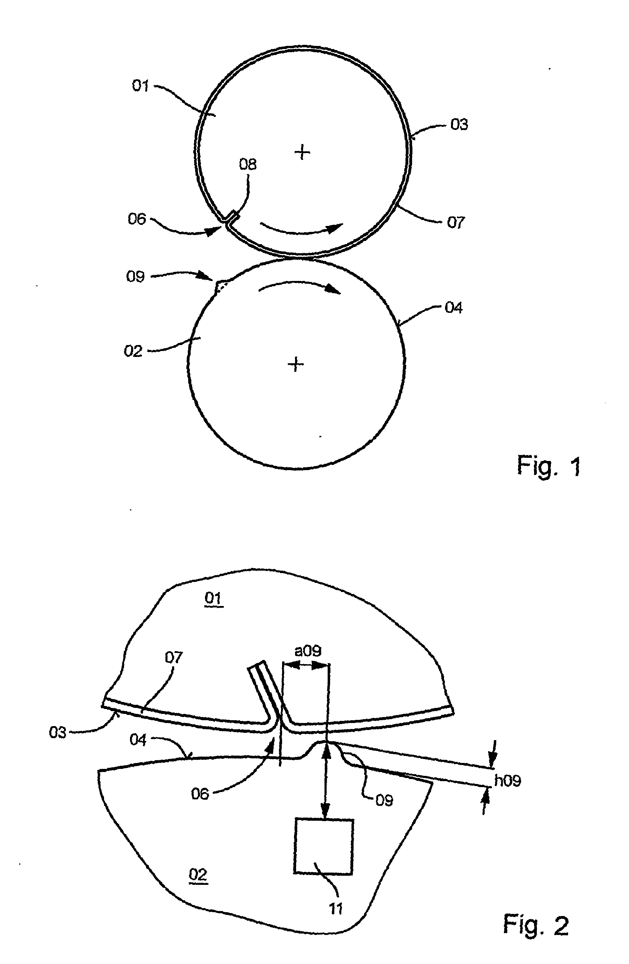

Ein rotierendes Bauteil 01, z. B. ein Zylinder 01 oder eine Walze 01 einer Maschine, z. B. einer Be- bzw. Verarbeitungsmaschine für Bahnen oder Bogen, insbesondere einer Rotationsdruckmaschine, wirkt in einer Anstelllage AN mit einem zweiten rotierenden Bauteil 02, z. B. einem Zylinder 02 oder einer Walze 02, zusammen. Die beiden im folgenden als Zylinder 01; 02 bezeichneten Bauteile 01; 02 rollen im Betrieb im Bereich ihrer wirksamen Mantelflächen 03; 04 aufeinander ab und sind in Anstelllage AN mit einer z. B. vorgebbaren bzw. einstellbaren Kraft aneinander angestellt (Fig. 1). Die Erfindung ist in vorteilhafter Weise auch anwendbar auf Walzen und Zylinder in Arbeitsmaschinen zur Herstellung von bandförmigem Material, z. B. Papier oder Blech etc., in Presseuren oder Walzwerken.

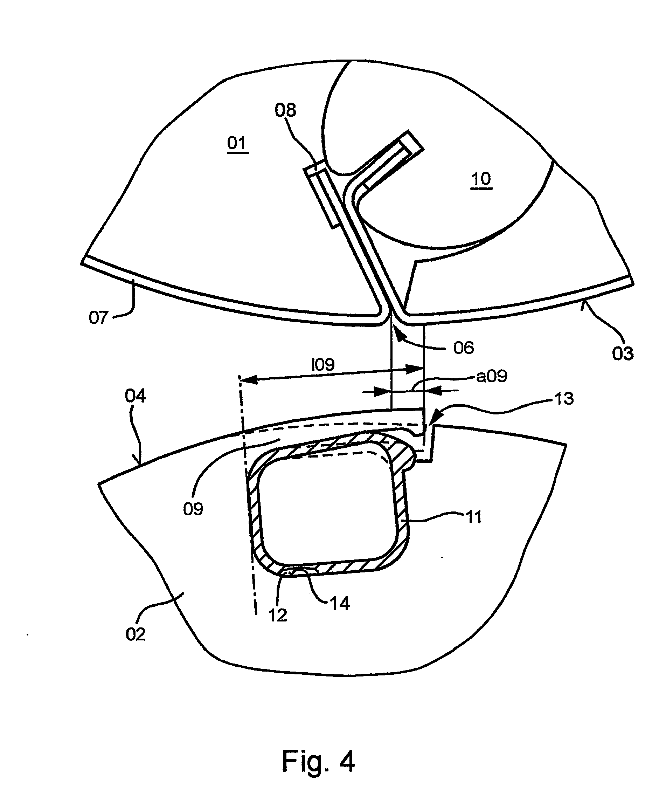

Mindesten einer der Zylinder 01; 02, hier z. B. der als Übertragungszylinder 01 ausgeführte Zylinder 01, weist im Bereich seiner wirksamen Mantelfläche 03 mindestens eine axial verlaufende Unterbrechung 06 von einer im unbelasteten Zustand ansonsten kreisförmigen Kontur auf. Die Unterbrechung 06 beruht beispielsweise auf einem Stoß von Enden eines oder mehrere auf dem Zylinder 01 angeordneter Aufzüge 07 bzw. darauf, dass Enden eines oder mehrerer Aufzüge 07 in einem im mantelflächennahen Bereich des Zylinders 01 axial verlaufenden Kanal 08 angeordnet sind. Eine Öffnung von der Mantelfläche des Zylinders 01 zum Kanal 08 ist in Umfangsrichtung möglichst klein gehalten und beträgt in vorteilhafter Ausführung maximal 3 mm. Der Kanal 08 kann sich zum Inneren hin aufweiten und eine Vorrichtung zum Klemmen und/oder Spannen 10 (Fig. 4) aufweisen. Er kann jedoch auch als Schlitz 08 ausgeführt sein.

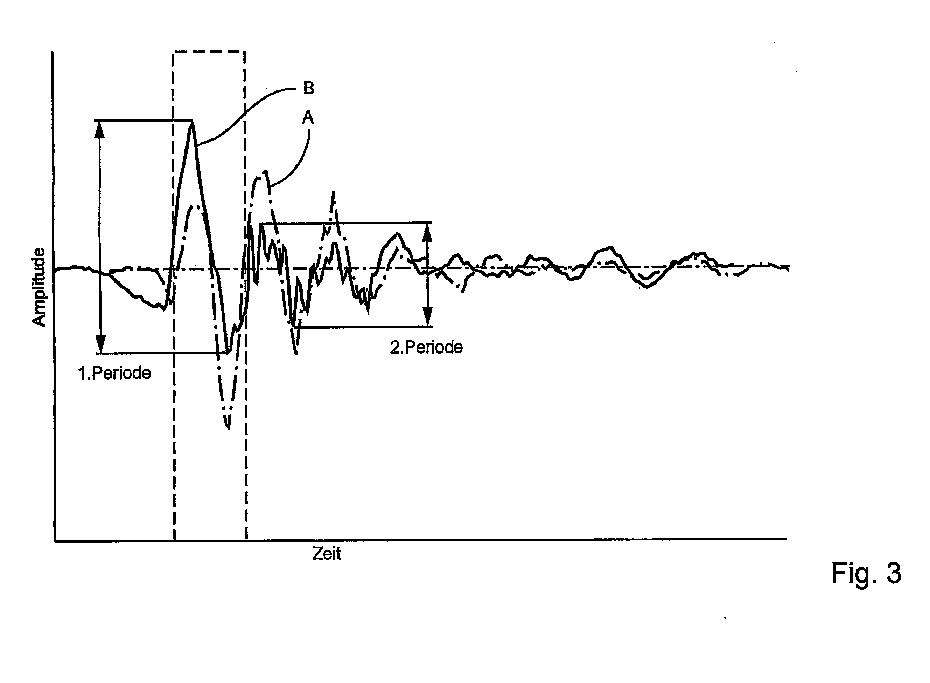

Die beiden Zylinder 01; 02 sind in Anstelllage AN mit einer Kraft größer Null aneinander angestellt und erfahren bei Durchgang der Unterbrechung 06 durch die Nippstelle eine Entlastung sowie eine anschließende erneute Belastung. Hierdurch wird eine Schwingung des Zylinders 01; 02 bzw. der Zylinder 01; 02 angeregt, welche u. a. von den Anstellkräften, den Geometrien von Unterbrechung 06 und Zylinder 01; 02, den Materialeigenschaften und der Drehzahl bzw. einer Abrollgeschwindigkeit v abhängig ist In Fig. 3, Kurve A, ist eine derartige Schwingung qualitativ dargestellt, wobei der strichlierter Bereich den Durchgang der Unterbrechung 06 in der Nippstelle bezeichnet. Diese durch den Durchgang der Unterbrechung(en) 06 angeregte Schwingung ist gedämpft und an dieser Stelle nicht zu Verwechseln mit durch Unwucht am einzelnen Zylinder 01; 02 ggf. induzierten.Schwingungen oder mit einer durch die Gravitation und/oder die Linienkraft verursachte Durchbiegung. Die Schwingung wird pro Umdrehung des Zylinders 01; 02 je Unterbrechung 06 und Nippstelle in Umfangsrichtung einmal angeregt.

Zur Dämpfung der Schwingung weist mindesten einer der Zylinder 01; 02, hier z. B. der als Formzylinder 02 ausgeführte Zylinder 02, im Bereich seiner wirksamen Mantelfläche 04 mindestens eine axial verlaufende Überhöhung 09 von einer im unbelasteten Zustand ansonsten kreisförmigen Kontur auf. Diese Überhöhung 09 kann sich axial über eine Länge des wirksamen Ballens durchgehend oder aber auch auf einem oder mehreren Abschnitten in axialer Richtung erstrecken. Wie in Fig. 2 angedeutet, weist die Überhöhung 09 eine Höhe h09 (des Maximums) gegenüber der ungestörten Kontur und einen effektiven Abstand a09 (des Maximums) von der Unterbrechung 06 im Hinblick auf einen Abrollweg an den abgewickelten Zylindern 01; 02 auf.

Beim Durchgang der Überhöhung 09 für sich betrachtet wird an den aufeinander abrollenden Zylindern 01; 02 ebenfalls eine Schwingung induziert Diese Gegenschwingung bewirkt je nach relativer Lage zum Durchgang der Unterbrechung 09, d. h. je nach abgewickeltem Abstand a09 (Phasenlage), und der Höhe h09 und/oder der Form der Überhöhung 09 eine Erhöhung oder Verminderung (im Idealfall Auslöschung) der durch den Durchgang der Unterbrechung 09 verursachten Schwingungsamplitude. Die Überhöhung 09 entfaltet, je nach Form und Lage eine Stützwirkung zwischen den sich durch Anregung radial relativ zueinander bewegenden Zylindern 01; 02.

Höhe und Form der erzeugten Gegenschwingung sind z. T. abhängig von der Form der Überhöhung 09, und - bei bzgl. der Umfangsrichtung unsymmetrischer Form - abhängig von der Drehrichtung der aufeinander abrollenden Zylinder 01; 02. In Fig. 3 ist ein durch Überlagerung der Schwingung und Gegenschwingung entstehender Verlauf für die resultierende Kurve B der Schwingung dargestellt, wobei die Anregung durch die Überhöhung 09 in Form einer Rampe (siehe unten) erzeugt wurde. Einer zunächst im Bereich des Durchgangs der Unterbrechung 09 feststellbaren Erhöhung in der Amplitude der Beschleunigung während der ersten Periode folgt bereits in der zweiten Periode eine deutliche Verminderung. Da es sich im Bereich der Unterbrechung 09 um einen nicht druckenden Bereich handelt, wirkt sich die kurzfristige Erhöhung der resultierenden Schwingung auf das Druckprodukt nicht negativ, die anschließende Verminderung jedoch positiv aus.

Die Überhöhung 09 ist nun derart ausgeführt, dass deren Höhe h09 gegenüber der ungestörten Kontur, insbesondere auch während des Betriebes, d. h. während des Abrollens der Zylinder 01; 02, veränderbar ist. Zu diesem Zweck weist der Zylinder 02 Mittel 11 zur Veränderung der Höhe h09, z. B. ein Stellmittel 11, insbesondere einen fernbetätigbaren Aktuator 11, auf. In einer vorteilhafter Ausführung ist auch der Abstand a09 (Fig. 4) veränderbar ausgeführt.

Die Überhöhung 09 ist auf unterschiedliche Art und Weise technisch realisierbar. So können beispielsweise radial bewegbare, mit einer geeigneten Form versehene Finger kammartig in Ausnehmungen auf der Mantelfläche des Grundkörpers des Zylinders 01; 02 versenkt sein und über ein Stellmittel 11 durch lineare oder rotatorische Bewegung radial bewegbar sein. Auch ist eine Variante möglich, wobei ein Bereich der Mantelfläche 03; 04 in gewissen Grenzen elastisch verformbar oder elastisch federnd ausgeführt, und durch ein im Zylinderinneren angeordnetes Stellmittel 11, z. B. Nocken oder Exzenterwelle oder andere Aktuatoren, in radialer Richtung auslenkbar ist

Auch der Aktuator 11 bzw. Aktuatoren 11 können auf unterschiedliche Weise, z. B. je nach Ausgestaltung der Überhöhung 09, ausgeführt sein. Er kann als Teil einer motorisch, hydraulisch bzw. pneumatisch angetriebenen Einheit, auf magnetische oder piezoelektrische Kräfte beruhenden Einheit ausgeführt sein.

In den folgenden Ausführungsbeispielen (Fig. 4 bis 12) ist die Vorrichtung und das Verfahren am Beispiel einer als Zunge/Lippe/Lasche 09 ausgeführten Überhöhung 09 dargestellt, welche im wesentlichen reversibel rückfedemd aus der Kontur der Mantelfläche 03; 04 heraus biegbar ist. Der die Zunge/Lippe/Lasche 09 betätigende Aktuator 11 ist hier als Teil einer hydraulisch wirksamen Einheit ausgeführt.

In Fig. 4 weist der mit dem Übertragungszylinder 01 zusammen wirkende Zylinder 02, hier der Formzylinder 02, die aufstellbare Zunge/Lippe/Lasche 09 auf. Die Zunge/Lippe/ Lasche 09 wird in Gestalt eines einarmigen Hebels durch einen innerhalb der Mantelfläche 04 axial verlaufenden Kanal 12 und eine den Kanal 12 mit der Umgebung verbindenden Unterbrechung 13 der Mantelfläche, z. B. einen axialen Schnitt 13, gebildet Die Zunge/Lippe/ Lasche 09 ist durch die hydraulische Einheit aufstellbar, welche als Aktuator 11 einen mit Druckmittel beauschlagbaren, reversibel verformbaren Hohlkörper 11 im axial im Zylinder 02 verlaufenden Kanal 12 aufweist. Der Hohlkörper 11 ist direkt unterhalb der Zunge/Lippe/Lasche 09 im Inneren des Zylinders 02 angeordnet und stützt sich in radialer Richtung nach innen zumindest bereichsweise an einer zylinderfesten Fläche 14 ab.

In Fig. 4 ist ebenfalls der effektive Abstand a09 zwischen der maximalen Überhöhung 09 (hier die Schnittkante) und der Unterbrechung 06, sowie eine effektive Schenkellänge 109 der Zunge/Lippe/Lasche 09 dargestellt Die effektive Schenkellänge 109 stellt die Länge der Zunge/Lippe/Lasche 09 in Umfangsrichtung von der Schnittkante bis zu dem Punkt dar, an welchem die Zunge/Lippe/Lasche 09 in radialer Richtung gesehen durch den Kanal 12 "unterhöhlt" ist. Die Zunge/Lippe/Lasche 09 reicht in vorteilhafter Ausführung über die gesamte Länge eines Ballens des Zylinders 02. In Fig. 4 ist die Zunge/Lippe/Lasche 09 in einer aktiven Stellung dargestellt, d. h. der Aktuator 11 ist wirksam. In einer anderen Ausführung mit gestaggerten Zylinderkanälen bzw. Aufzügen, d. h. mehrere in axialer Richtung nebeneinander angeordnete Unterbrechungen 06 sind in Umfangsrichtung versetzt zueinander angeordnet, können auch mehrere Überhöhungen 09 in der selben Weise gestaggert angeordnet sein.

Der als Hohlkörper 11 ausgeführte Aktuator 11 bezieht sein Fluid bzw. den Druck P z. B. über eine nicht dargestellte Drehdurchführung im Bereich eines nicht dargestellten Zapfens des Zylinders 03 von außerhalb.

Der Formzylinder 02 wirkt in Anstelllage mit dem Übertragungszylinder 01 zusammen, auf dessen Mantelfläche der Aufzug 07, z. B. ein Gummituch 07, gespannt ist. Enden 16; 17 des selben oder zweier verschiedener in Umfangsrichtung hintereinander angeordneter Aufzüge 07 sind durch eine im Kanal 08 befindliche Klemm- und/oder Spannvorrichtung gehalten. Im Bereich, in welchem die Enden 16; 17 die Öffnung des Kanals 08 verlassen bildet sich die Unterbrechung 06 in der wirksamen Mantelfläche 03 aus.

Der Abstand a09 beträgt in vorteilhafter Ausführung einer Länge, welche einem Weg auf der Mantelfläche 03; 04 eines Sektors des Zylinders 01; 02 mit einem Öffnungswinkel von -1 bis 8°, insbesondere 3 bis 6°, entspricht.

In einer vorteilhaften Ausführung mit Zylindern 01; 02 einer Länge I01; I02 von 1.350 bis 1.550 mm und einem wirksamen Umfang von 420 bis 700 mm, insbesondere 500 bis 600 mm, weist die Zunge/Lippe/Lasche 09 eine effektive Schenkellänge 109 von 10 bis 30 mm, insbesondere von 16 bis 21 mm, auf. Der Abstand a09 beträgt z. B. 1,25 bis 15 mm, insbesondere 4 mm bis 10 mm.

Das Verhältnis zwischen Abstand a09 und dem Umfang liegt zwischen 0,002 und 0,02, insbesondere zwischen 0,005 und 0,015. Das Verhältnis zwischen Schenkellänge I09 und dem Umfang liegt zwischen 0,02 und 0,04, insbesondere zwischen 0,03 und 0,035.

Die gemäß Fig. 4 ausgeführte Überhöhung 09 als Zunge/Lippe/Lasche 09 ist bezüglich der Drehrichtung des Zylinders 01; 02 bzw. der Zylinder 01; 02 unsymmetrisch ausgeführt. In einer Richtung wirkt die Überhöhung 09 rampenförmig mit einem entsprechena geformten Kraftstoß, während in anderer Drehrichtung eine Stoß an einer unstetigen Sprungstelle induziert wird. Beide Formen zeigen den oben beschriebenen Effekt, wobei jedoch die Anregung mit Durchfahren der Rampe/ die Drehrichtung mit unstetiger Sprungstelle von größerem Vorteil ist

Die Höhe h09 und/oder der Abstand a09 kann je nach Drehrichtung, Drehzahl und Stärke der Zustellung (Linienkraft) der Zylinder 01; 02 verschieden eingestellt werden. Hierzu kann einer weiter unten erläuterten Steuerung oder Regelung die Drehrichtung als eine den Maschinenzustand oder die Maschine charakterisierende Größen g zugeführt werden.

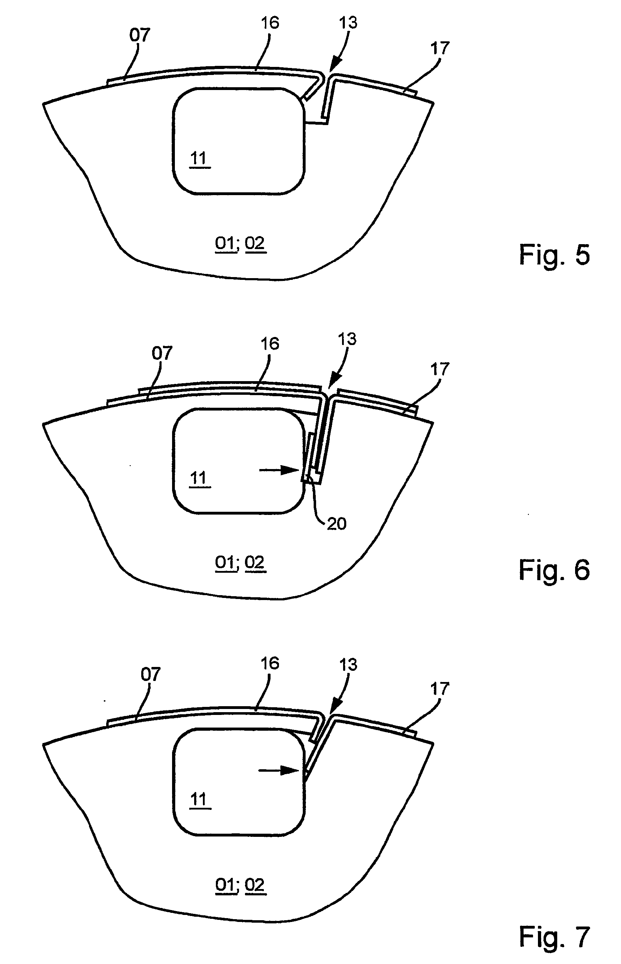

Eine Überhöhung 09 entsprechend oder ähnlich der in Fig. 4 am Beispiel des Formzylinders 02 dargestellten Anordnung kann entweder zusätzlich, oder an Stelle des Formzylinders 02 am Übertragungszylinder 01 angeordnet sein. In den folgenden Figuren 5 bis 7 sind verschiedene Varianten zur Integration einer Klemmvorrichtung für den Aufzug 07 bzw. dessen Enden 16; 17 dargestellt Diese Anordnungen sind sowohl auf als Druckformen 07 auf dem Formzylinder 02 oder als Gummitücher 07 auf dem Übertragungszylinder 01 ausgeführte Aufzüge 07 anwendbar. Im Fall von Gummitüchern 07 ist die Verwendung von Metalldrucktüchem 07 (elastisch verformbare Auflage auf einer Metallunterlage) vorteilhaft, da diese im Bereich ihrer Enden 16; 17 ähnlich denen von Druckformen 07 gestaltbar und im Kanal 08 klemmbar sind.

In Fig. 5 ist die Unterbrechung 13 als Öffnung 13 in der Weise ausgeführt, dass sie sehr schmal, kleiner oder gleich 3 mm, ausgeführt ist, wobei die Enden 16; 17, z. B. Aufzugenden 16; 17 lediglich eingehängt werden.

In Fig. 6 ist die Unterbrechung 13 als Öffnung 13 in der Weise ausgeführt, dass der Aktuator 11 gleichzeitig, entweder über einen Hebelmechanismus 20 (lediglich schematisch angedeutet) oder direkt auf ein oder zwei Aufzugenden 16; 17 einwirkt und diese klemmt.

In Fig. 7 ist die Unterbrechung 13 als Öffnung 13 in der Weise ausgeführt, dass beispielsweise das vorlaufende Aufzugende 16 im wesentlichen durch die Formgebung der Kante gehalten, und das nachlaufende Aufzugende 17 durch den Aktuator 11 geklemmt wird.

Wie oben dargelegt, ist die Überhöhung 09 in ihrer Höhe h09 veränderbar ausgeführt. Im folgenden werden Ausführungsbeispiele für das Verfahren zur Steuerung bzw. Regelung und die hierzu erforderliche Vorrichtung dargelegt.

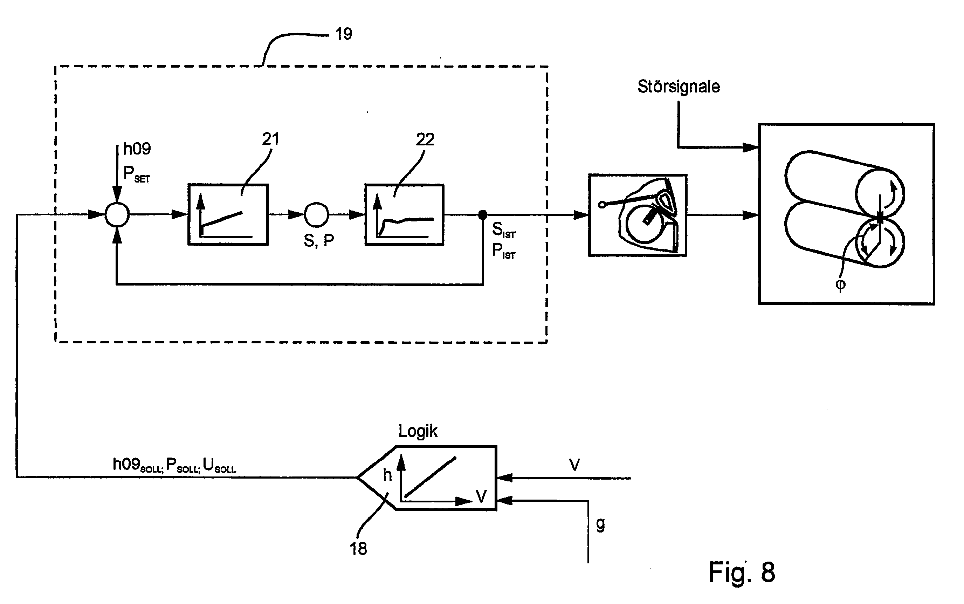

In einem ersten Ausführungsbeispiel (Fig. 8) erfolgt die Verminderung anhand einer Steuerkette, welche einen untergeordneten Regelkreis beinhalten kann.

Als Führungsgröße der übergeordneten Steuerkette dient eine den Maschinenzustand, insbesondere die Abrollgeschwindigkeit v kennzeichnende Größe v, wie z. B. die Drehzahl oder die Winkelgeschwindigkeit Diese Größe v kann, z. B. mit anderen den Maschinenzustand oder die Maschine charakterisierenden Größen g, aus einer übergeordneten Maschinensteuerung entnommen oder aber auch in geeigneter Weise gemessen werden. Der Größe v wird nun in einer logischen Einheit 18 anhand eines hinterlegten Zusammenhanges (Tabellarisch, arithmetisch, etc.) ein Sollwert für die Stellgröße als Ausgangsgröße der logischen Einheit 18 zugewiesen. Die Stellgröße kann direkt eine gewünschte Höhe h09 der Überhöhung 09, ein Druck P, ein Weg S, eine Spannung U etc. sein. Entsprechend wird als Ausgangsgröße z. B. ein Sollwert h09_{SOLL} für die Höhe h09 der Überhöhung 09, ein Sollwert P_{SOLL} für den Druck P einer hydraulischen Einheit, ein Sollwert S_{SOLL} für ein Weg- oder Positionssignals S eines Aktuators 11, oder ein Sollwert U_{SOLL} für das Spannungssignals U eines Aktuators 11 festgelegt. Dieser Sollwert h09_{SOLL}; P_{SOLL}; S_{SOLL}; U_{SOLL} dient einer untergeordneten Regelung 19 wiederum als Führungsgröße. Eine Regeleinrichtung 21, z. B. ein Regler 21, und insbesondere eine Regelstrecke 22 der Regelung 19 können nun in unterschiedlicher Weise, abgestimmt auf die Art des Aktuators 11 und die Eingangsgröße ausgeführt sein.

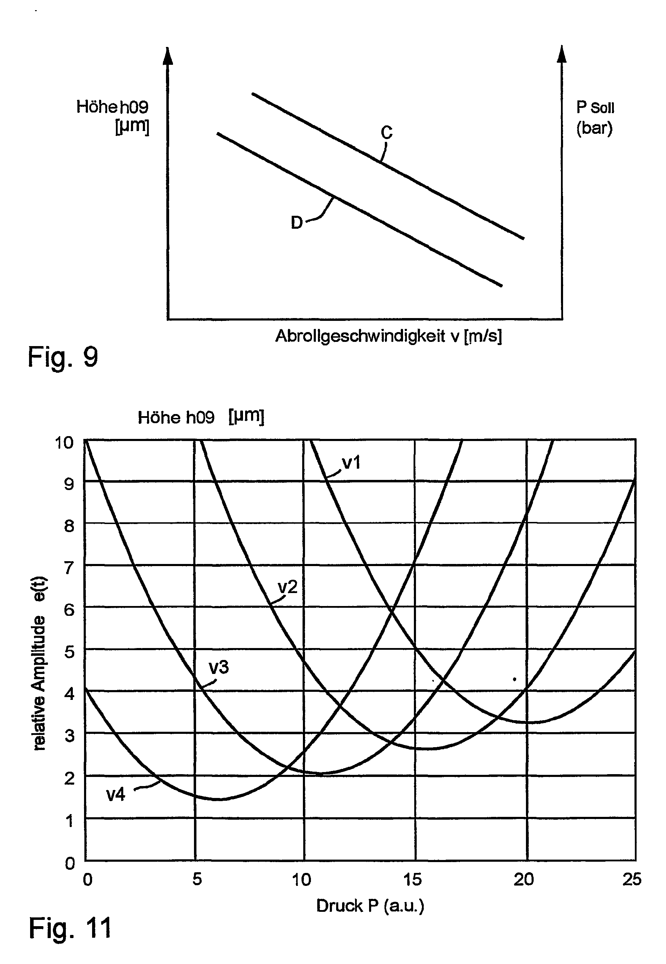

Als Logik ist in der logischen Einheit 18 ein funktionaler bzw. algebraischer, insbesondere linearer, Zusammenhang zwischen der Abrollgeschwindigkeit v und der gewünschten Überhöhung 09 (bzw. einem entsprechenden Weg-, Druck-, Spannungssignal) hinterlegt (Fig. 9). Dieser (insbesondere linearisierte) Zusammenhang zwischen Abrollgeschwindigkeit v und dem Sollwert h09_{SOLL}; P_{SOLL}; S_{SOLL}; U_{SOLL} für die Höhe h09 der Überhöhung 09 bzw. den Druck P, den Weg S oder die Spannung U kann für unterschiedliche Zylindergeometrien und/oder für den Maschinenzustand oder die Maschine charakterisierenden Größen g mehrfach vorliegen und entsprechend ausgewählt werden (Fig. 9: Zusammenhänge C, D).

Ein derartiger Zusammenhang kann vorteilhaft auch zum An- und Hochfahren der Druckmaschine verwendet werden, so dass zu jeder Abrollgeschwindigkeit v eine geeignete Überhöhung 09 vorliegt

Die Regelung erlaubt in Weiterbildung durch ihren adaptiven Aufbau eine Optimierung für die realen Produktionsbedingungen bzw. Umgebungen.

Für den Fall einer hydraulischen Einheit nach Ausführungsbeispiel gemäß Fig. 4 bis 7 ist als Logik z. B. ein linearisierter Zusammenhang zwischen Abrollgeschwindigkeit v und dem Sollwert P_{SOLL} für den Druck P hinterlegt Dieser Logik kann des weiteren ein bekannter Zusammenhang zwischen dem Druck P im Hohlkörper 11 und der resultierenden Höhe h09 der Überhöhung 09 zugrunde liegen. Durch die Regelung 19 wird nun über die als Ventil 22 ausgeführte Regelstrecke 22 der als Hohlkörper 11 ausgeführte Aktuator 11 mit dem entsprechenden Druck P beaufschlagt und ggf. aufrecht erhalten, wobei ein Istwert P_{IST} in den untergeordneten Regelkreis zurück geführt wird (entsprechendes gilt für vom Druck P verschiedene Stellgrößen S; U; h09). Die Zunge/Lippe/ Lasche 09 wird somit in Abhängigkeit von der Abrollgeschwindigkeit v entsprechend dem anliegenden Druck P_{IST} um die korrespondierende Höhe h09 angehoben und dort gehalten. Ändert sich die Abrollgeschwindigkeit v oder eine andere Produktionsbedingung, so erfolgt eine erneute Festlegung und Einstellung des Druckes P (bzw. anderer Stellgrößen). Eine Überprüfung der Abrollgeschwindigkeit v muss nicht kontinuierlich erfolgen, sondern kann in diskreten Intervallen, z. B. jeweils nach einer bestimmten Anzahl von Zylinderumdrehungen, erfolgen. Dem untergeordneten Regelkreis ist in Weiterbildung auch ein Startwert P_{SET} zuführbar, welcher beispielsweise in einer Anfahrphase oder extrem instationärer Bedingungen aus einer Maschinensteuerung oder manuell vorgebbar ist

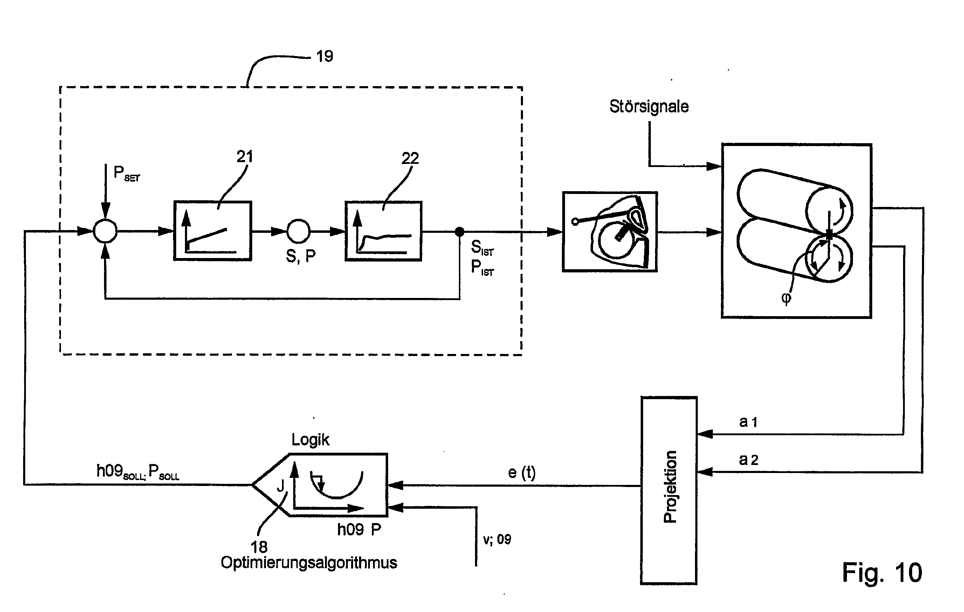

In einem weiteren Ausführungsbeispiel (Fig. 10) erfolgt die Verminderung anhand einer übergeordneten Regelung, welche wieder den oben beschriebenen Regelkreis der untergeordneten Regelung 19 beinhalten kann.

Im Unterschied zu Fig. 8 wird ein die Schwingung charakterisierender Wert e(t) als Eingangsgröße in die logische Einheit 18 geführt. Der Wert e(t) beinhaltet insbesondere einen Relativwert zwischen an den beiden Zylindern 01; 02 gemessenen Amplituden a1; a2, welche auf eine Ebene durch Rotationsachsen der beiden Zylinder 01; 02 projiziert werden. Im folgenden wird der Wert e(t) daher auch als relative Amplitude e(t) bezeichnet Schwingen die beiden Zylinder 01; 02 gleichphasig in dieser Ebene mit der selben Amplitude e(t), so würde sich hierbei ein Wert Null ergeben. Zusätzlich kann wie in Fig. 8 auch die Abrollgeschwindigkeit v und/oder andere den Maschinenzustand bzw. die Maschine charakterisierenden Größen g als Eingangsgröße zugeführt werden. Im weiteren Unterschied zu Fig. 8 weist die logische Einheit 18 einen Optimierungsalgorithmus auf, welcher anhand der Werte e(t) die Ausgangsgröße h09_{SOLL}; P_{SOLL} in der Weise variiert, dass e(t) minimiert wird.

Die Variation erfolgt in vorteilhafter Ausgestaltung entlang in der logischen Einheit 18 vorgehaltener Zusammenhänge, z. B. der Abhängigkeit der relativen Amplitude e(t) von der Höhe h09 oder dem Druck P (Fig. 11) oder dem Abstand a09. Für verschiedene Bereiche der Abrollgeschwindigkeit v (bzw. Drehzahl) kann eine Kurvenschar oder ein arithmetischer Zusammenhang vorgegeben sein. Bei bekannter Abrollgeschwindigkeit v (bzw. Drehzahl) erfolgt nun eine Variation entlang dem für diese Abrollgeschwindigkeit v (bzw. Drehzahl) vorgegebenen Zusammenhang. So steht beispielsweise in Fig. 11 eine mit v1 bezeichnete Kurve für eine Drehzahl von 20.000 U/h, v2 für 40.000 U/h, v3 für 60.000 U/h und v4 für 80.000 U/h. Auch hier muss eine Messung der Schwingung und eine daraus ggf. resultierende Variation nicht kontinuierlich erfolgen sondern ist regelmäßig nach endlichen Zeitintervallen oder über eine bestimmten Anzahl von Zylinderumdrehungen zu ermitteln.

Die Weiterverarbeitung des in der beschriebenen Weise in der logischen Einheit 18 erzeugten Sollwertes h09_{SOLL}; P_{SOLL} erfolgt entsprechend der zu Fig. 8 dargelegten Weise.

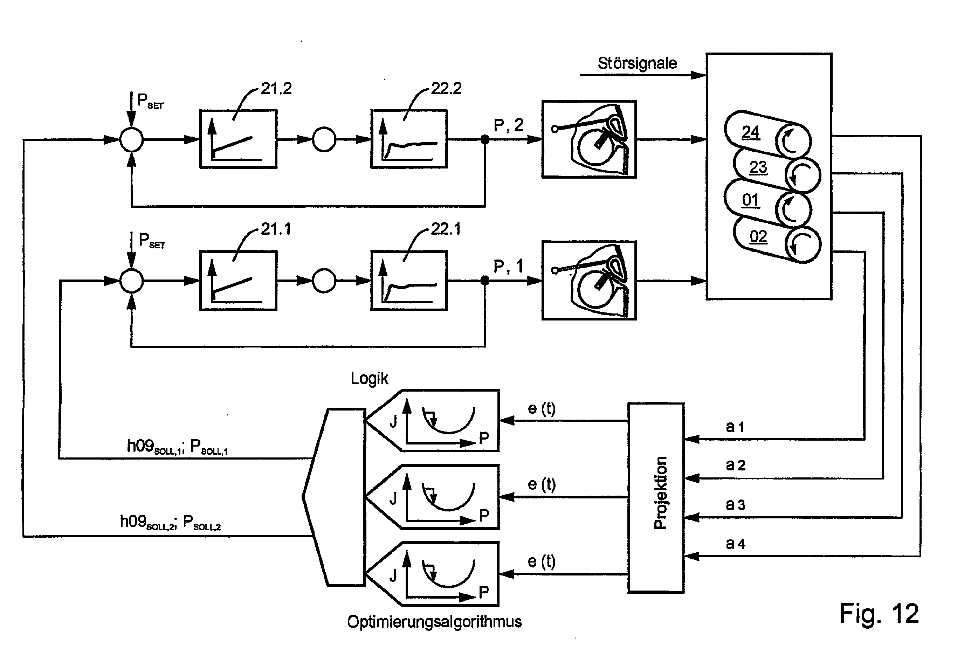

Fig. 12 zeigt ein Mehrwalzen- insbesondere Verwalzensystem, wobei der bereits beschriebene Übertragungszylinder 01 nicht nur mit seinem Formzylinder 02, sondern in Anstelllage AN mit einem weiteren Bauteile 23, z. B. Zylinder 23 als Gegendruckzylinder 23, hier einem zweiten Übertragungszylinder 23, zusammenwirkt. Dem zweiten Übertragungszylinder 23 ist ein Bauteil 24, z. B. Zylinder 24, z. B. ein zweiter Formzylinder 24, zugeordnet, der in Anstelllage AN mit diesem zusammen wirkt. Von den vier Zylindern 01; 02; 23; 24 weisen z. B. lediglich zwei, insbesondere die beiden Übertragungszylinder 01; 23 einen Aktuator 11 und eine in ihrer Höhe h09 und/oder Phasenlage (Abstand a09) veränderbare Überhöhung 09 auf. Die grundlegende Wirkungsweise ist auch auf andere Mehrwaltensysteme wie z. B. Satellitendruckeinheiten mit 3, 9 oder 10 zusammen wirkenden Zylindern anzuwenden.

In Analogie zum Ausführungsbeispiel nach Fig. 10 werden vier Amplituden bzw. Schwingungsverläufe a1; a2; a3; a4 (entspricht Anzahl der Zylinder) an den beteiligten Zylindern 01; 02; 23; 24 ermittelt und hiermit eine der Anzahl von Nippstellen entsprechende Anzahl von relativen Amplituden e1(t); e2(t); e3(t) gebildet, welche als Eingangsgrößen der logischen Einheit 18 zugeführt werden. Dem Optimierungsalgorithmus liegt nun je Nippstelle jeweils ein Zusammenhang für den jeweiligen Durchgang der Überhöhung 09 bzw. der Unterbrechung 06 durch die Nippstelle vor. Wird einer der inneren Zylinder 01; 23, z. B. der Übertragungszylinder 01 betrachtet, so erfolgt zu einem bestimmten Zeitpunkt der Durchgang an der Nippstelle zum Formzylinder 02 und zu einem anderen Zeitpunkt der Durchgang zum zweiten Übertragungszylinder 23. Die Anforderung an die optimale Höhe h09 bzw. an den gewünschten Druck P_{SOLL} kann für die beide Durchgänge somit unterschiedlich sein. Diese Problematik kann nun vorteilhaft auf zwei unterschiedliche Weisen gelöst werden.

In einer ersten Ausführungsform wird eine Höhe h09_{SOLL,1} bzw. ein Druck P_{SOLL,1} in der logischen Einheit 18 derart ermittelt, dass unter Beachtung der beiden, die relativen Amplituden e1 (t) und e2(t) berücksichtigenden Abhängigkeiten ein Kompromiss gefunden wird, welcher die beiden relativen Amplituden e1(t) und e2(t) insgesamt minimiert Das selbe gilt für die beiden anderen Zylinder 23; 24 unter Berücksichtigung der relativen Amplituden e3(t) und e2(t) für die Höhe h09_{SOLL,2} bzw. den Druck P_{SOLL,2}. Der jeweilige Aktuator 11.1 bzw. 11.2 wird dann über den zugeordneten Regler 21.1; 21.2 und die z. B. als Ventil ausgeführte Regelstrecke 22.1; 22.2 für die vorliegende Abrollgeschwindigkeit v mit der diesem Kompromiss entsprechenden Höhe h09 bzw. mit dem entsprechenden Druck P,1; P2 beaufschlagt, welcher auf P_{SOLL,1} bzw. P_{SOLL,2} geregelt ist bzw. wird.

In einer zweiten Ausführungsform erfolgt eine phasenabhängige Variation der Optimierung für die Höhe h09 bzw. den Druck P_{SOLL}. Die Höhe h09 der Überhöhung 09 kann nun je Umdrehung des den Aktuator 11 aufweisenden Zylinders 01; 23 mindestens zwei mal geändert werden und nimmt in diesem Fall jeweils zum Zeitpunkt des Durchgangs durch die eine oder die andere Nippstelle verschiedene Werte an. Die Höhe h09 wird dann je Umdrehung in Abhängigkeit von der Winkellage des den Aktuator 11 aufweisenden Zylinders 01; 23 verändert. Sind in Umfangsrichtung der bzw. des Zylinders 01; 02; 23; 24 mehr als eine Unterbrechung 06 und/oder Überhöhung 09 angeordnet, so vervielfacht sich die Anzahl der ggf. erforderlichen Änderungen bzw. die Anzahl der Werte für die Höhe h09 ggf. entsprechend.

Im Fall der vier Zylinder 01; 02; 23; 24 werden als Sollwerte P_{SOLL,1}; P_{SOLL,2} zwei Drücke P_{SOLL},₁; P_{SOLL,2} von der logischen Einheit 18 ausgegeben, welche jeweils in eine untergeordnete Regelung 19 für jeweils einen Aktuator 11 einer veränderbare Überhöhung 09 geführt werden. Die beiden Überhöhungen 09 sind hierbei an den beiden Übertragungszylindern 01; 23 angeordnet.

Es können in Umfangsrichtung jeweils auch mehr als eine Überhöhung 09, z. B. zwei Überhöhungen 09 angeordnet sein. In diesem Fall kann je Überhöhung 09 des Zylinders 01; 02; 23; 24, aber auch für alle Überhöhungen 09 eines Zylinders 01; 23 eine gemeinsame untergeordnete Regelung 19 sowie ein gemeinsamer Sollwert P_{SOLL} vorliegen. Auch können alle Zylinder 01; 02; 23; 24 Überhöhungen 09 und/oder Unterbrechungen 06 aufweisen.

Wie oben dargelegt ist in einer vorteilhaften Ausführung auch der Abstand a09 (bzw. die Phasenlage) zwischen Unterbrechung 06 und Überhöhung 09 veränderbar ausgeführt.

Dies kann in einer Ausführungsform beispielsweise mechanisch erfolgen, indem eine wirksame Form der Überhöhung 09 oder aber deren absolute Lage verändert wird. Im ersten Fall kann z. B. eine die Überhöhung 09 aufweisende axial verlaufende Spindel eine entsprechende Formgebung auf ihrer Außenfläche derart aufweisen, dass bei verdrehen der Spindel durch einen nicht dargestellten Aktuator ein anderer Bereich der Außenfläche als Überhöhung 09 wirksam wird. Im zweiten Fall können beispielsweise in Ausnehmungen auf der Mantelfläche des Grundkörpers des Zylinders 01; 02 kammartig angeordnete Finger durch einen nicht dargestellten Aktuator in Umfangsrichtung bewegt werden.

In einer anderen Ausführung sind die beiden zusammen wirkenden Zylinder 01; 02; 23; 24 in ihrer Drehwinkellage ϕ zueinander veränderbar ausgeführt. Die Änderung der relativen Drehwinkellage ϕ bewirkt für den Fall, dass Unterbrechung 06 und zugeordnete Überhöhung 09 auf unterschiedlichen Zylindern 01; 02; 23; 24 angeordnet sind, die Änderung des Abstandes a09. Dies kann z. B. derart realisiert sein, dass die beiden Zylinder 01; 02; 23; 24 mittels verschiedener Antriebsmotoren mechanisch unabhängig voneinander rotatorisch angetrieben sind. In diesem Fall erhält einer der i. d. R. elektronisch synchronisierten Antriebsmotoren für die Änderung des Abstandes a09 einen Offset in seiner Sollwinkellage aufgeprägt. Die Änderung der relativen Drehwinkellage kann jedoch auch mit herkömmlichen mechanischen Vorrichtungen, wie sie beispielsweise zur Einstellung der Lage in Umfangsrichtung üblich sind, durchgeführt werden.

Die Steuerung bzw. Regelung des Abstandes a09 kann in entsprechender Weise, wie zu den Ausführungsbeispielen gemäß Fig. 8 bis 12 erläutert, erfolgen. Wie zur Höhe h09 dargelegt, können dann entsprechende Zusammenhänge zwischen der Abrollgeschwindigkeit v und dem Abstand a09, bzw. Optimierungsalgorithmen zur Erzeugung einer Variation im Abstand a09 in Abhängigkeit von der relativen Amplitude e(t) und ggf. von der Abrollgeschwindigkeit v hinterlegt sein.

### Bezugszeichenliste

- 01: rotierendes Bauteil, Zylinder, Walze, Übertragungszylinder
- 02: rotierendes Bauteil, Zylinder, Walze, Formzylinder
- 03: Mantelfläche
- 04: Mantelfläche
- 05: -
- 06: Unterbrechung,
- 07: Aufzug, Gummituch, Druckform, Metalldrucktuch
- 08: Kanal, Schlitz
- 09: Überhöhung, Zunge/Lippe/Lasche
- 10: Klemm- und/oder Spanneinrichtung
- 11: Mittel zur Veränderung der Höhe, Stellmittel, Aktuator, Hohlkörper
- 11.1: Mittel zur Veränderung der Höhe, Stellmittel, Aktuator, Hohlkörper
- 11.1: Mittel zur Veränderung der Höhe, Stellmittel, Aktuator, Hohlkörper
- 12: Kanal
- 13: Unterbrechung, Schnitt, Öffnung
- 14: Fläche
- 15: -
- 16: Ende, Aufzugende (07)
- 17: Ende, Aufzugende (07)
- 18: logische Einheit,
- 19: Regelung
- 20: Hebelmechanismus
- 21: Regeleinrichtung, Regler
- 21.1: Regeleinrichtung. Regler
- 21.2: Regeleinrichtung, Regler
- 22: Regelstrecke, Ventil
- 22.1: Regelstrecke, Ventil
- 22.2: Regelstrecke, Ventil
- 23: Bauteil, Zylinder, Gegendruckzylinder, Übertragungszylinder
- 24: Bauteil, Zylinder, Formzylinder
- A: Kurve
- B: Kurve
- C: Zusammenhang
- D: Zusammenhang
- a09: Abstand
- a1: Amplitude, Schwingungsverlauf
- a2: Amplitude, Schwingungsverlauf
- a3: Amplitude, Schwingungsverlauf
- a4: Amplitude, Schwingungsverlauf
- v1: Kurve
- v2: Kurve
- v3: Kurve
- v4: Kurve
- e(t): Wert, relative Amplitude
- e1 (t): Wert, relative Amplitude
- e2(t): Wert, relative Amplitude
- e3(t): Wert, relative Amplitude
- ϕ: Drehwinkellage
- h09: Höhe (09)
- h09_{IST}: Sollwert
- h09_{SOLL}: Sollwert
- h09_{SOLL,1}: Sollwert
- h09_{SOLL,2}: Sollwert
- I09: effektive Schenkellänge
- P: Druck
- P,1: Regelstrecke, Ventil
- P,2: Regelstrecke, Ventil
- P_{IST}: Istwert
- P_{SOLL}: Sollwert
- P_{SOLL,1}: Sollwert
- P_{SOLL,2}: Sollwert
- P_{SET}: Vorgabewert
- S: Weg, Position
- S_{IST}: Sollwert
- S_{SOLL}: Sollwert
- U: Spannung
- U_{SOLL}: Sollwert
- g: Größe
- v: Größe, Abrollgeschwindigkeft

## Patentansprüche

1. Verfahren zur Verminderung von Schwingungen von zumindest zwei aufeinander abrollenden rotierenden Bauteilen (01; 02; 23; 24) mit mindestens einer aus einer im wesentlichen kreisförmigen Kontur einer wirksamen Mantelfläche (03; 04) herausragenden Überhöhung (09) auf wenigstens einem der rotierenden Bauteile (01; 02; 23; 24), **dadurch gekennzeichnet, dass** eine Höhe (h09) der Überhöhung (09) in radialer Richtung und/oder eine relative Lage der Überhöhung (09) in Umfangsrichtung in Abhängigkeit von einer einen Maschinenzustand und/oder die Schwingung charakterisierenden Größe (v; g; a1; a2; a3; a4; e(t)) verändert wird.

2. Verfahren nach Anspruch 1, **dadurch gekennzeichnet, dass** die Höhe (h09) und/oder die relative Lage der Überhöhung (09) in Abhängigkeit von einer Abrollgeschwindigkeit (v) gesteuert wird.

3. Verfahren nach Anspruch 1, **dadurch gekennzeichnet, dass** die Höhe (h09) und/oder die relative Lage der Überhöhung (09) in Abhängigkeit von einer zumindest an einem der Bauteile (01; 02; 23; 24) ermittelten Amplitude (a1; a2; a3; a4) geregelt wird.

4. Verfahren nach Anspruch 1, **dadurch gekennzeichnet, dass** die Veränderung der relativen Lage der Überhöhung (09) in Umfangsrichtung bezüglich eines effektiven Abstandes (a09) zu einer Unterbrechung (06) auf einer wirksamen Mantelfläche (03; 04) wenigstens eines der Bauteile (01; 02; 23; 24) erfolgt.

5. Verfahren nach Anspruch 2 oder 3, **dadurch gekennzeichnet, dass** das Steuern bzw. Regeln anhand eines in einer logischen Einheit (18) vorgehaltenen Zusammenhangs erfolgt.

6. Verfahren nach Anspruch 5, **dadurch gekennzeichnet, dass** der Zusammenhang durch eine Abhängigkeit zwischen einem Sollwert (h09_{SOLL}; P_{SOLL} ; S_{SOLL}; U_{SOLL}) für den Betriebspunkt eines Aktors (11) und der Abrollgeschwindigkeit (v) gebildet wird.

7. Verfahren nach einem oder mehreren der vorstehenden Ansprüche, **dadurch gekennzeichnet, dass** ein Sollwert (h09_{SOLL}; P_{SOLL} , S_{SOLL}; U_{SOLL}) für den Betriebspunkt eines Aktuators (11) anhand eines vorgehaltenen Zusammenhangs zwischen einer relativen Amplitude (e(t)) der beiden Bauteile (01; 02; 23; 24) und einer Stellgröße (h09; P; S; U) zur Betätigung des Aktuators (11) variiert wird.

8. Rotierendes schwingungsgedämpftes Bauteil mit mindestens einer aus einer im wesentlichen kreisförmigen Kontur einer wirksamen Mantelfläche (03; 04) herausragenden Überhöhung (09), **dadurch gekennzeichnet, dass** eine Höhe (h09) der Überhöhung (09) in radialer Richtung und/oder eine relative Lage der Überhöhung (09) in Umfangsrichtung veränderbar ausgeführt ist.

9. Bauteil nach Anspruch 8, **dadurch gekennzeichnet, dass** eine Steuerkette mit einer logischen Einheit (18) vorgesehen ist, durch welche die Höhe (h09) der Überhöhung (09) und/oder eine relative Lage der Überhöhung (09) in Umfangsrichtung in Abhängigkeit von einer einen Maschinenzustand charakterisierenden Größen (v; g) gesteuert ist.

10. Bauteil nach Anspruch 8, **dadurch gekennzeichnet, dass** eine Regelung mit einer logischen Einheit (18) vorgesehen ist, durch welche die Höhe (h09) der Überhöhung (09) und/oder eine relative Lage der Überhöhung (09) in Umfangsrichtung in Abhängigkeit von einer die Schwingung charakterisierenden Größen (a1; a2; a3; a4; e(t)) geregelt ist.

11. Bauteil nach Anspruch 8, **dadurch gekennzeichnet, dass** die Überhöhung (09) in der Art einer Zunge/Lippe/Lasche (09) im Bereich der Mantelfläche eines Grundkörpers des Bauteils (01; 02; 23; 24) ausgeführt ist.

12. Bauteil nach Anspruch 11, **dadurch gekennzeichnet, dass** sich die Zunge/Lippe/Lasche (09) in axialer Richtung über im wesentlichen die gesamte Länge (I01; 102) eines Ballens des Bauteils (01; 02; 23; 34) erstreckt.

13. Bauteil nach Anspruch 11, **dadurch gekennzeichnet, dass** ein Verhältnis zwischen einer Schenkellänge (109) der Zunge/Lippe/Lasche (09) und einem Umfang (U) des Bauteils (01; 02; 23; 24) zwischen 0,02 und 0,04 liegt.

14. Bauteil nach Anspruch 8, **dadurch gekennzeichnet, dass** das die Höhe (h09) verändernde Mittel (11) als fernbetägigbarer Aktuator (11) ausgeführt ist.

15. Bauteil nach Anspruch 14, **dadurch gekennzeichnet, dass** der Aktuator (11) als mit Druckmittel angetriebener Aktuator (11) ausgeführt ist.

16. Bauteil nach Anspruch 14, **dadurch gekennzeichnet, dass** der Aktuator (11) als reversibel verformbarer Hohlkörper (11) ausgeführt ist, welcher in einem axial im Bauteil (01; 02; 23; 24) verlaufenden Kanal (12) unter der Zunge/Lippe/Lasche (09) angeordnet ist.

17. Bauteil nach Anspruch 8, **dadurch gekennzeichnet, dass** das Bauteile (01; 02; 23; 24) eine Unterbrechung (06) auf seiner wirksamen Mantelfläche (03; 04) aufweist.

18. Bauteil nach Anspruch 17, **dadurch gekennzeichnet, dass** ein Verhältnis von einem bezüglich eines Abrollens definierten Abstandes (a09) zwischen der Überhöhung (09) und der Unterbrechung (06) zu einem Umfang (U) des Bauteils (01; 02; 23; 24) zwischen 0,002 und 0,02 liegt.

## Claims

1. Method for reducing vibrations of at least two rotating components (01; 02; 23; 24) which roll on one another with at least one elevation (09) on at least one of the rotating components (01; 02; 23; 24), which elevation (09) protrudes out of a substantially circular contour of an active circumferential face (03; 04), **characterized in that** a height (h09) of the elevation (09) in the radial direction and/or a relative position of the elevation (09) in the circumferential direction are/is changed as a function of a variable (v; g; a1; a2; a3; a4; e(t)) which characterizes a machine state and/or the vibration.

2. Method according to Claim 1, **characterized in that** the height (h09) and/or the relative position of the elevation (09) are/is controlled as a function of a rolling speed (v).

3. Method according to Claim 1, **characterized in that** the height (h09) and/or the relative position of the elevation (09) are/is regulated as a function of an amplitude (a1; a2; a3; a4) which is determined at least on one of the components (01; 02; 23; 24).

4. Method according to Claim 1, **characterized in that** the change in the relative position of the elevation (09) in the circumferential direction takes place with regard to an effective spacing (a09) from a gap (06) on an active circumferential face (03; 04) of at least one of the components (01; 02; 23; 24).

5. Method according to Claim 2 or 3, **characterized in that** the control or regulation takes place using a relationship supplied in a logic unit (18).

6. Method according to Claim 5, **characterized in that** the relationship is formed by an interdependence between a setpoint value (h09_{SOLL}; P_{SOLL}; S_{SOLL}; U_{SOLL}) for the operating point of an actuator (11) and the rolling speed (v).

7. Method according to one or more of the preceding claims, **characterized in that** a setpoint value (h09_{SOLL}; P_{SOLL;} S_{SOLL}; U_{SOLL}) for the operating point of an actuator (11) is varied using a supplied relationship between a relative amplitude (e(t)) of the two components (01; 02; 23; 24) and an actuating variable (h09; P; S; U) for actuating the actuator (11).

8. Rotating vibration-damped component with at least one elevation (09) which protrudes out of a substantially circular contour of an active circumferential face (03; 04), **characterized in that** a height (h09) of the elevation (09) in the radial direction and/or a relative position of the elevation (09) in the circumferential direction are/is of variable configuration.

9. Component according to Claim 8, **characterized in that** a control chain is provided with a logic unit (18), by which the height (h09) of the elevation (09) and/or a relative position of the elevation (09) in the circumferential direction are/is controlled as a function of a variable (v; g) which characterizes a machine state.

10. Component according to Claim 8, **characterized in that** a regulation operation is provided with a logic unit (18), by which the height (h09) of the elevation (09) and/or a relative position of the elevation (09) in the circumferential direction are/is regulated as a function of a variable (a1; a2; a3; a4; e(t)) which characterizes the vibration.

11. Component according to Claim 8, **characterized in that** the elevation (09) is configured in the manner of a tongue/lip/tab (09) in the region of the circumferential face of a basic body of the component (01; 02; 23; 24).

12. Component according to Claim 11, **characterized in that** the tongue/lip/tab (09) extends in the axial direction via substantially the entire length (I01; I02) of a barrel of the component (01; 02; 23; 24).

13. Component according to Claim 11, **characterized in that** a ratio between a limb length (I09) of the tongue/lip/tab (09) and a circumference (U) of the component (01; 02; 23; 24) lies between 0.02 and 0.04.

14. Component according to Claim 8, **characterized in that** the means (11) which changes the height (h09) is configured as an actuator (11) which can be actuated remotely.

15. Component according to Claim 14, **characterized in that** the actuator (11) is configured as an actuator (11) which is driven with pressure medium.

16. Component according to Claim 14, **characterized in that** the actuator (11) is configured as a reversibly deformable hollow body (11) which is arranged under the tongue/lip/tab (09) in a channel (12) which extends axially in the component (01; 02; 23; 24).

17. Component according to Claim 8, **characterized in that** the component (01; 02; 23; 24) has a gap (06) on its active circumferential face (03; 04).

18. Component according to Claim 17, **characterized in that** a ratio of a spacing (a09), defined with regard to rolling, between the elevation (09) and the gap (06) to a circumference (U) of the component (01; 02; 23; 24) lies between 0.002 and 0.02.

## Revendications

1. Procédé pour réduire des vibrations se produisant sur au moins deux composants (01 ; 02 ; 23 ; 24) rotatifs roulant l'un sur l'autre, avec au moins une surélévation (09) ressortant d'un contour sensiblement circulaire d'une surface d'enveloppe (03 ; 04) active, sur au moins l'un des composants (01 ; 02 ; 23 ; 24) rotatifs, **caractérisé en ce qu'**une hauteur (h09) de la surélévation (09), en direction radiale et/ou une position relative de la surélévation (09) en direction périphérique est modifiée en fonction d'une grandeur (v ; g ; a1 ; a2 ; a3 ; a4 ; e(t)) caractérisant un état machine et/ou la vibration.

2. Procédé selon la revendication 1, **caractérisé en ce que** la hauteur (h09) et/ou la position relative de la surélévation (09) est/sont commandée(s) en fonction d'une vitesse de déroulement (v).

3. Procédé selon la revendication 1, **caractérisé en ce que** la hauteur (h09) et/ou la position relative de la surélévation (09) est/sont régulée(s) en fonction d'une amplitude (a1 ; a2 ; a3 ; a4) déterminée sur au moins l'un des composants (01 ; 02 ; 23 ; 24).

4. Procédé selon la revendication 1, **caractérisé en ce que** la modification de la position relative de la surélévation (09) en direction périphérique par rapport à un espacement (a09) effectif s'effectue par rapport à une interruption (06) sur une surface d'enveloppe (03 ; 04) active d'au moins l'un des composants (01 ; 02 ; 23 ; 24).

5. Procédé selon la revendication 2 ou 3, **caractérisé en ce que** la commande ou la régulation s'effectue à l'aide d'une relation stockée préalablement dans une unité logique (18).

6. Procédé selon la revendication 5, **caractérisé en ce que** la relation est formée par une dépendance entre une valeur de consigne (h09_{SOLL} ; P_{SOLL} ; S_{SOLL} : U_{SOLL}) pour le point de fonctionnement d'un actionneur (11) et la vitesse de déroulement (v).

7. Dispositif selon l'une ou plusieurs des revendications précédentes, **caractérisé en ce qu'**une valeur de consigne (h09_{SOLL} ; P_{SOLL} ; S_{SOLL} : U_{SOLL}) pour le point de fonctionnement d'un actionneur (11) est modifiée à l'aide d'une relation stockée préalablement entre une amplitude relative (e(t)) des deux composants (01 ; 02 ; 23 ; 24) et une grandeur de réglage (h09 ; P ; S ; U) pour l'actionnement de l'actionneur (11).

8. Composant rotatif amorti en vibrations, avec au moins une surélévation (09) ressortant d'un contour sensiblement circulaire d'une surface d'enveloppe (03 ; 04) active, **caractérisé en ce qu'**une hauteur (h09) de la surélévation (09), en direction radiale et/ou une position relative de la surélévation (09) en direction périphérique est réalisée de manière à pouvoir être modifiée en direction radiale et/ou une position relative de la surélévation (09) est réalisée de manière à pouvoir être modifiée en direction périphérique.

9. Composant selon la revendication 8, **caractérisé en ce qu'**est prévue une chaîne de commande avec une unité logique (18), au moyen de laquelle la hauteur (h09) de la surélévation (09) et/ou une position relative de la surélévation (09) en direction périphérique est commandée en fonction d'une grandeur (v ; g) caractérisant un état machine.

10. Composant selon la revendication 8, **caractérisé en ce qu'**est prévue une régulation avec une unité logique (18), au moyen de laquelle la hauteur (h09) de la surélévation (09) et/ou une position relative de la surélévation (09) en direction périphérique est régulée en fonction d'une grandeur (a1 ; a2 ; a3 ; a4 ; e(t)) caractérisant la vibration.

11. Composant selon la revendication 8, **caractérisé en ce que** la surélévation (09) est réalisée à la manière d'une languette/lèvre/patte (09) dans la zone de la surface d'enveloppe d'un corps de base du composant (01 ; 02 ; 23 ; 24).

12. Composant selon la revendication 11, **caractérisé en ce que** la languette/lèvre/patte (09) s'étend en direction axiale sur sensiblement la longueur totale (I01 ; I02) d'un corps du composant (01 ; 02 ; 23 ; 24).

13. Composant selon la revendication 11, **caractérisé en ce qu'**un rapport, entre une longueur de branche (I09) de la languette/lèvre/patte (09) et une circonférence (U) du composant (01 ; 02 ; 23 ; 24) est dans la fourchette comprise entre 0,02 et 0,04.

14. Composant selon la revendication 8, **caractérisé en ce que** les moyens (11) modifiant la hauteur (h09) sont réalisés sous forme d'actionneur (11) pouvant être télécommandé.

15. Composant selon la revendication 14, **caractérisé en ce que** l'actionneur (11) est réalisé sous forme d'actionneur (11) entraîné par un fluide sous-pression.

16. Composant selon la revendication 14, **caractérisé en ce que** l'actionneur (11) est réalisé sous forme de corps creux (1) déformable de manière réversible, disposé dans un canal (12) s'étendant axialement dans le composant (01 ; 02 ; 23 ; 24), sous la languette/lèvre/patte (09).

17. Composant selon la revendication 8, **caractérisé en ce que** le composant (01 ; 02 ; 23 ; 24) présente une interruption (06) sur sa surface d'enveloppe (03 ; 06) active.

18. Composant selon la revendication 17, **caractérisé en ce qu'**un rapport, entre un espacement (a09), défini par rapport à un déroulement, entre la surélévation (09) et l'interruption (06) et une circonférence (U) du composant (01 ; 02 ; 23 ; 24) est dans la fourchette comprise entre 0,002 et 0,02.
